# EUROPEAN PATENT APPLICATION

(11) **EP 2 117 274 A1**
(43) Date of publication of application: **11.11.2009**
(21) Application number: 09159561.1
(22) Date of filing: 06.05.2009
(51) Int. Cl.: H04W 48/16

(54) **Cell selection method and apparatus for communication system**

(30) Priority: 09.05.2008 KR 20080043196
(71) Applicant: Samsung Electronics Co., Ltd., Suwon-si, Gyeonggi-do (KR)
(72) Inventor: Ha, Yong Min, Suwon-si, Gyeonggi-do (KR)
(74) Representative: Ketelaars, Maarten F.J.M.

(57) **Abstract**

A cell selection method and mobile terminal is provided for efficiently selecting/reselecting a suitable cell to camp on in a communication system. the cell selection method of the present invention retrieves recorded cell information (203) in response to a cell selection event (201), selects, when the recorded cell information is retrieved (207,217), a cell using the recorded cell information, and selects, when no recorded cell information is retrieved, a cell using neighbor cell information extracted from a system information message broadcast by a serving cell (219). The cell selection method and mobile terminal of the present invention stores the cell information acquired in the previous cell selection/reselection procedure and uses the previously stored cell information in the next cell selection/reselection procedure, thereby reducing the cell selection time and thus the power consumption.

## Description

### BACKGROUND OF THE INVENTION

### Field of the Invention

The present invention relates to a communication system and, in particular, to a method and mobile terminal for efficiently selecting/reselecting a suitable cell to camp on in a communication system.

### Description of the Related Art

Typically, when a mobile terminal powers on, it searches for a cell to communicate with. This is called a cell selection procedure. A cell is a communication service area defined by radio coverage of a base station and uniquely identified.

The cell selection procedure is performed, whenever the mobile terminal discovers a new network, for determining which cell is the most appropriate to camp on. The network can be a Public Land Mobile Network (PLMN). When an appropriate cell is discovered, the network to which the cell belongs becomes an available PLMN.

When a traffic overload or a user or network request is detected, the mobile terminal performs cell selection process again. This is called cell reselection procedure.

For various causes including the above ones, the mobile terminal performs the sell selection/reselection procedure. At this time, the mobile terminal searches all frequencies in the frequency band of the network.

However, the conventional cell search technique caries out this full scan every cell selection/reselection procedure, resulting in long cell selection time. Furthermore, the long cell selection time increases power consumption of the mobile terminal.

### SUMMARY OF THE INVENTION

In order to solve the above problems of the prior arts, the present invention provides a cell selection method and mobile terminal that is capable of facilitating the cell selection procedure.

Also, the present invention provides a cell selection method and mobile terminal that is capable of reducing cell selection delay and thus power consumption by performing the cell selection using the previously acquired cell information.

Also, the present invention provides a cell selection method and mobile terminal that is capable of efficiently selecting/reselecting a cell using the cell information acquired during the previous cell selection/reselection procedure and the neighbor cell information extracted from the system information message transmitted by the serving cell.

In accordance with an exemplary embodiment of the present invention, a cell selection method for a mobile terminal in a communication system includes retrieving recorded cell information in response to a cell selection event; selecting, when the recorded cell information is retrieved, a cell using the recorded cell information; and selecting, when no recorded cell information is retrieved, a cell using neighbor cell information extracted from a system information message broadcast by a serving cell.

In accordance with another exemplary embodiment of the present invention, a mobile terminal includes a radio frequency unit which establishes a communication channel with a serving network for voice and data communication and receiving system information message; a storage unit which stores cell information for used in a cell selection process and applications for performing the cell selection process; and a control unit which determines a cell selection mode and controls the cell selection process using the cell information in the cell selection mode.

### BRIEF DESCRIPTION OF THE DRAWINGS

The above and other objects, features and advantages of the present invention will be more apparent from the following detailed description in conjunction with the accompanying drawings, in which:
FIG. 1 is a flowchart illustrating steps of a cell selection method according to an exemplary embodiment of the present invention;
FIG. 2 is a flowchart illustrating a cell selection method according to another exemplary embodiment of the present invention;
FIG. 3 is a flowchart illustrating a cell selection method according to another exemplary embodiment of the present invention; and
FIG. 4 is a block diagram illustrating a configuration of a mobile terminal according to an exemplary embodiment of the present invention.

### DETAILED DESCRIPTION OF EXEMPLARY EMBODIMENTS

Exemplary embodiments of the present invention are described with reference to the accompanying drawings in detail. The same reference numbers are used throughout the drawings to refer to the same or like parts. Detailed descriptions of well-known functions and structures incorporated herein may be omitted to avoid obscuring the subject matter of the present invention.

The present invention proposes a cell selection method and apparatus. In exemplary embodiments of the present invention, cell selection/reselection is performed in consideration of previously acquired cell information so as to reduce the time required for acquiring a suitable cell and thus reduce the power consumption of the mobile terminal. In an exemplary embodiment, the cell information can include previously acquired cell information and neighbor cell information.

In an exemplary embodiment, the mobile terminal includes a storage means for storing cell information and a means for executing cell selection procedure using the cell information stored in the storage means. In an exemplary embodiment, the mobile terminal saves the cell information acquired in the previous cell selection/reselection procedure and the neighbor cell information received from a network. The mobile terminal performs a cell selection process using the cell information including the previous cell information and the neighbor cell information extracted from the system information message broadcast by the network.

A cell selection method according to an exemplary embodiment of the present invention is described hereinafter with reference to the drawings.

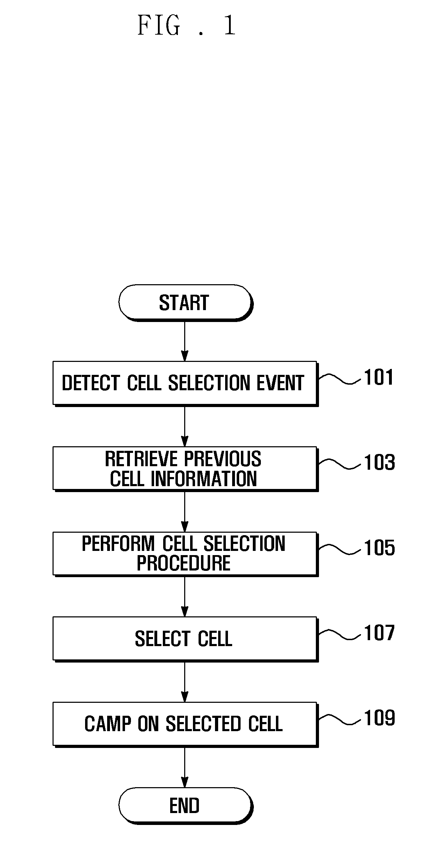

FIG. 1 is a flowchart illustrating steps of a cell selection method according to an exemplary embodiment of the present invention.

Referring to FIG. 1, the mobile terminal first detects a cell selection trigger event (S101) and checks the previous cell information (S103). The cell selection is triggered by various events such as power-on of the mobile terminal, sudden release of the communication channel with a serving network, and handoff of the mobile terminal between cells. For the sake of simplicity, the term "cell selection" is used for the cell reselection process as well as the cell selection process.

The previous cell information means the cell information acquired in the previous cell selection/reselection procedure and stored in a specific storage region of the mobile terminal. The previous cell information can include the cell information acquired in previous cell selection procedure and neighbor cell information acquired from the broadcast message of the serving cell. The broadcast message can be the system information message broadcasted by the serving cell periodically.

Typically, the system information message includes the system information shared by the cells belonged to the same network in common such that the mobile terminal accesses the network using the system information. All mobile terminals receive the system information message broadcast by their serving cell.

The system information message includes a Master Information Block indicating identity and schedule of the broadcast system information, Scheduling Blocks (SMs) for defining scheduling information, and a plurality of System Information Blocks (SIBs). The system information message is broadcast over entire cell.

The mobile terminal can receive the system information on a specific channel (e.g. Broadcast Control Channel, or BCCH) of the serving network (e.g. PLMN). The mobile terminal can obtain the information required for access to the network as well as information on the Core Network (CN).

Returning to FIG. 1, the mobile terminal performs a cell selection procedure using the previous cell information (S105). Next, the mobile terminal selects the most suitable cell as a result of the cell selection procedure (S107) and camps on the most suitable cell (S109).

In an exemplary embodiment, the mobile terminal can store the previous cell information, i.e. the cell information acquired in the previous cell selection procedure and the neighbor cell information extracted from the system information transmitted by the serving network, in the form of a cell information table. For this purpose, the mobile terminal is preferably provided with at least one of a buffer, an internal memory, and a subscriber identity module. The cell information table can be formatted as shown in exemplary tables 1 and 2.

**Table 1**

| | | | | |
|---|---|---|---|---|
| Network #1 | Cell info. 1 | Cell info. 2 | | Cell info. m |
| Network # 2 | Cell info. 1 | Cell info. 2 | | Cell info. m |
| : | : | : | : | : |
| Network #n | Cell info. 1 | Cell info. 2 | | Cell info. m |

**Table 2**

| | | | | | |
|---|---|---|---|---|---|
| Previous cell | Network #1 | Cell info. 1 | Cell info. 2 | | Cell info. m |
| | Network #2 | Cell info. 1 | Cell info. 2 | | Cell info. m |
| | | | | | |
| | Network #n | Cell info. 1 | Cell info. 2 | | Cell info. m |
| Neighbor cell | Network #1 | Cell info. 1 | Cell info. 2 | | Cell info. m |
| | Network #1 | Cell info. 1 | Cell info. 2 | | Cell info. m |
| | | | | | |
| | Network #1 | Cell info. 1 | Cell info. 2 | | Cell info. m |

Table 1 shows exemplary previous cell information, and table 2 shows an exemplary cell information table integrating the previous cell information and the neighbor cell information. The previous cell information and the neighbor cell information can be separately stored in the form of table 1 or can be integrally stored in the form of table 2.

As shown in tables 1 and 2, the cell information table is composed of a set of fields (columns) and records (rows). Each network (e.g. PLMN) record is composed of multiple cell information fields. In an exemplary embodiment, the cell information can include at least one of channel number of serving cell, Base Station Identifier (BSID), Mobile Country Code (MCC), Mobile Network Code (MNC), and BCCH Allocation list. The channel number can be the Absolute Radio Frequency Channel Number (ARFCN) of a PLMN. The ARFCN is a channel number of identifying the radio channel of a cell which is uniquely assigned by the PLMN to which the cell belongs.

As shown in tables 1 and 2, the cell information table can be configured to include at least one of previous cell information and neighbor cell information, and the size of the cell information table depends on the storage space of the mobile terminal.

The exemplary cell information table 1 can contain the cell information of m cells of n networks, and the exemplary cell information table 2 is provided with a previous cell information region and a neighbor cell information region each can contain cell information of m cells of n networks.

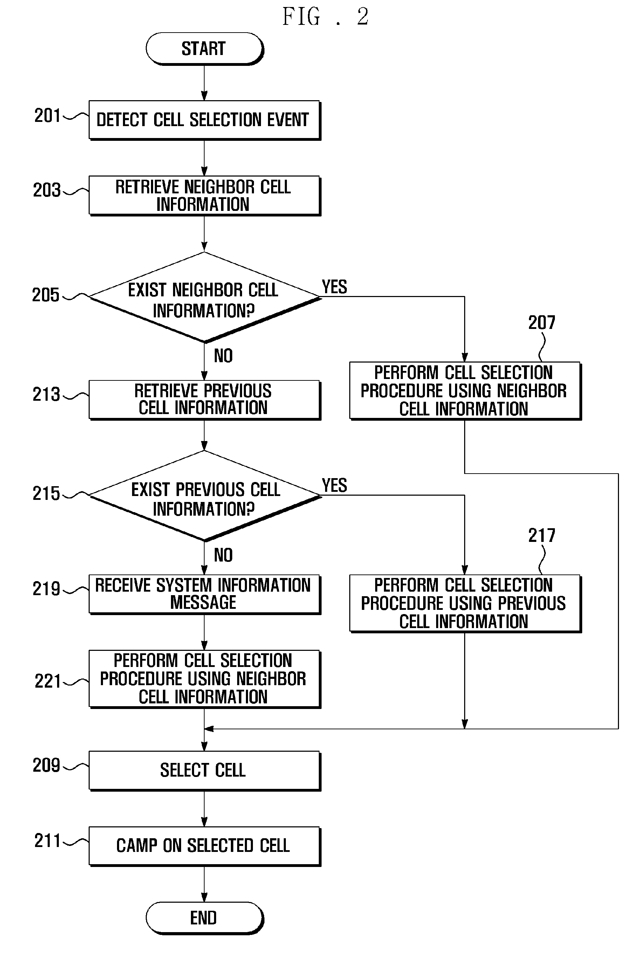

FIG. 2 is a flowchart illustrating a cell selection method according to another exemplary embodiment of the present invention.

Referring to FIG. 2, the mobile terminal first detects a cell selection trigger event (S201) and retrieves neighbor cell information (S203). The cell selection is triggered by various events described in association with FIG. 1. The neighbor cell information is the information on the neighbor cells of the serving cell and stored in a neighbor cell information storage region. The neighbor cell information is acquired from the system information message transmitted by the serving cell. Upon receipt of the system information message broadcast by the serving cell, the mobile terminal extracts the neighbor cell information from the system information message and stores the neighbor cell information into the neighbor cell information storage region.

Next, the mobile terminal determines whether neighbor cell information is retrieved (S205). If neighbor cell information is successfully retrieved, the mobile terminal performs the cell selection procedure with the retrieved neighbor cell information (S207) and selects one of the neighbor cells indicated by the neighbor cell information as the most suitable cell (S209).

Otherwise, if no neighbor cell information is retrieved at step S205, the mobile terminal retrieves previous cell information (S213). Here, the previous cell information is the information acquired in the previous cell selection procedure and stored in the previous cell information storage region of the cell information area.

Next, the mobile terminal determines whether previous cell information is retrieved (S215). If previous cell information is successfully retrieved, the mobile terminal performs the cell selection procedure with the retrieved previous cell information (S217) and selects one of the cells indicated by the previous cell information as the most suitable cell (S209).

Otherwise, if no previous cell information is retrieved at step S215, the mobile terminal receives the system information message which is transmitted by the serving cell and extracts neighbor cell information from the received system information message (S219). Next, the mobile terminal performs the cell selection procedure with the currently received neighbor cell information (S221) and selects one of the neighbor cells indicated by the neighbor cell information as the most suitable cell (S209).

Once the most suitable cell is selected at any of steps S207, S209, and S217, the mobile terminal camps on the most suitable cell (S211).

Although the previous cell information retrieval steps S213 and S215 follows the neighbor cell information retrieval steps S203 and S205 in FIG. 2, the present invention is not limited thereto. For example, the previous cell information search steps S213 and S215 can precedes the previous cell information search steps S203 and S205.

Although the neighbor cell information retrieval steps S203 and S205 and the previous cell information retrieval steps are depicted in a sequential order for the sake of simplicity, the neighbor and previous cell retrievals can be carried out in parallel simultaneously.

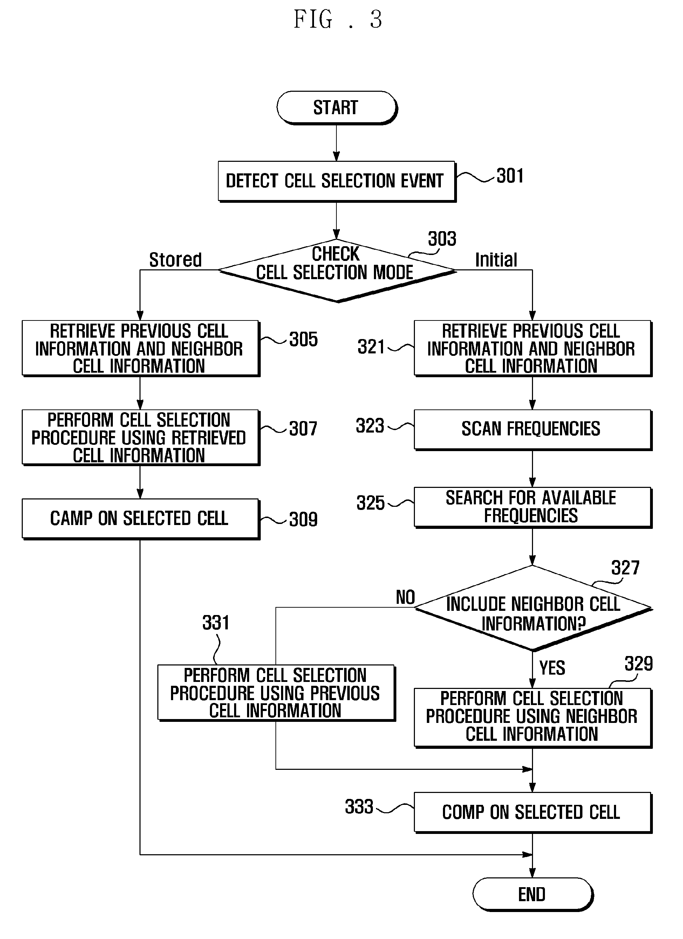

FIG. 3 is a flowchart illustrating a cell selection method according to another exemplary embodiment of the present invention.

Referring to FIG. 3, the mobile terminal first detects a cell selection trigger event (S301). Once a cell selection trigger event is detected, the mobile terminal checks a cell selection mode (S303). In an exemplary embodiment, the mobile terminal can operate in two different cell selection modes, i.e. a recorded cell selection mode and an initial cell selection mode. The cell selection mode can be activated according to a user setting or depending on the system environment. Accordingly, when a cell selection trigger event is detected, the mobile terminal checks a preset cell selection mode.

In the recorded cell selection mode, the mobile terminal performs a cell acquisition process to the frequencies indicated by the recorded cell information without frequency scan process.

In the initial cell selection mode, the mobile terminal scans frequencies, performs cell acquisition process to the searched frequencies, and then selects a cell as a result of the cell acquisition process.

The mobile terminal can operate in a user preferable cell selection mode set by the user. Once the cell selection mode is determined, the mobile terminal performs cell selection procedure in the determined cell selection mode to camp on a cell.

If it is determined that the mobile terminal is set to operate in the recorded cell selection mode at step S303, the mobile terminal retrieves the recorded cell information and the neighbor cell information (S305). The recorded cell information and neighbor cell information are characterized as described above.

Next, the mobile terminal performs the cell selection procedure using at least one of the previous cell information and the neighbor cell information retrieved at step S305 (S307). Once a suitable cell is selected at step S307, the mobile terminal camps on the selected cell (S309).

If it is determined that the mobile terminal is set to operate in the initial cell selection mode at step S303, the mobile terminal retrieves the previous cell information and the neighbor cell information (S321). The previous cell information and the neighbor cell information are characterized as described above.

Next, the mobile terminal scans all frequencies (S323) and searches for available frequencies as a result of the frequency scan (S325).

Next, the mobile terminal determines whether there is at least one frequency corresponding to the neighbor cell information (S327). In an exemplary embodiment, the mobile terminal operating in the initial cell selection mode performs the cell acquisition process preferably to the frequencies both searched in the frequency scan process and indicated by the neighbor cell information.

If there is no frequency that is both searched in the frequency scan process and indicated by the neighbor cell information, the mobile terminal performs the cell selection process to the frequencies indicated by the previous cell information (S331).

Otherwise, if there is at least one frequency that is searched in the frequency scan process and indicated by the neighbor cell information, the mobile terminal performs the cell selection process to the frequencies indicated in the neighbor cell information (S329).

Once a cell is selected at any of steps S329 and S331, the mobile terminal camps on the selected cell (S333).

Until now, the cell selection methods according to exemplary embodiments are described. The internal structures and functions of the mobile terminal for performing the above described cell selection procedure are described hereinafter. Although the structures and functions of the mobile terminal are characterized in any detail according to an exemplary embodiment hereinafter, it should be understood that many variations and modification are possible according to various embodiments.

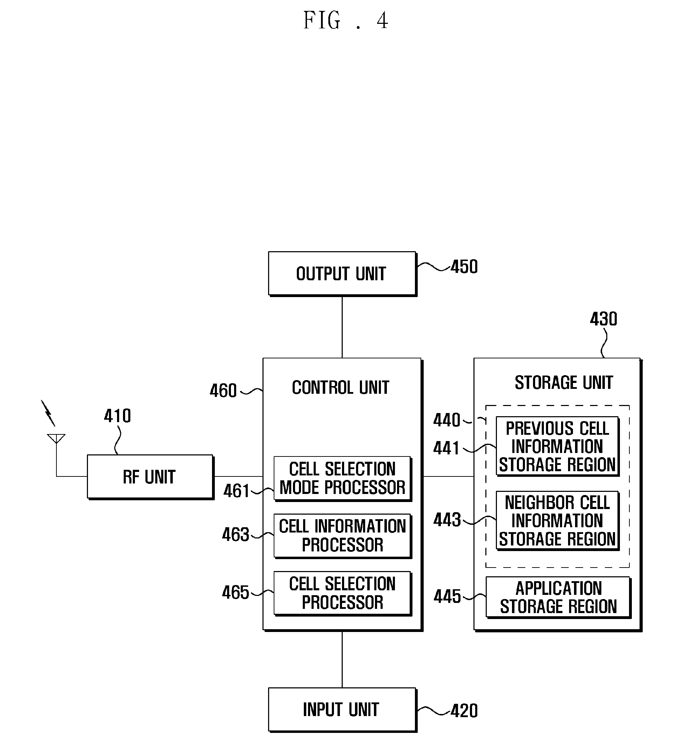

FIG. 4 is a block diagram illustrating a configuration of a mobile terminal according to an exemplary embodiment of the present invention.

Referring to FIG. 4, the mobile terminal includes a Radio Frequency (RF) unit 410, an input unit 420, a storage unit 430, an output unit 450, and a control unit 460. The storage unit 430 includes a cell information storage region 440 and an application storage region 445; and the control unit 460 includes a cell selection mode processor 461, a cell information processor 463, and a cell selection processor 465.

The RF unit 410 is responsible for radio communication of the mobile terminal. The RF unit 410 establishes a communication channel with a base station of a network for data and voice communications. Particularly in an exemplary embodiment, the RF unit 410 receives the system information message broadcast by the serving cell of a network. The system information includes neighbor cell information. Once the system information message is received by means of the RF unit 410, the control unit 460 extracts the neighbor cell information from the system information message.

The input unit 420 is responsible for receiving various kinds of user input. The input unit 420 may include a key input unit for receiving the user's data input and an audio processing unit for processing audio input. The audio processing unit includes a microphone for receiving an audio signal (e.g., voice signal) and delivering the audio signal to the control unit 450. The key input unit generates alphanumeric data signals and command signals for configuring and executing functions of the mobile terminal and transfers these signals to the control unit 460. The key input unit can be implemented with at least one of a touchpad, a touchscreen, a normal keypad, a qwerty keypad, and other type of function key set.

The storage unit 430 stores application programs related to the operation of the mobile terminal, application data generated by the application programs, and user data created by the user. The storage unit 430 can include at least one buffer for storing the data generated while the application programs are running.

In an exemplary embodiment of the present invention, the storage unit 430 stores the cell information that is used in the cell selection procedure. The cell information is stored in the cell information storage region 440. The cell information can be classified into the recorded cell information and the neighbor cell information. In correspondence to these two types of cell information, the cell information storage region 440 is divided into the recorded cell information storage region 441 and the neighbor cell storage region 443. The cell information can be stored in the cell information storage region 440 in the form of one of the exemplary tables 1 and 2.

The recorded cell information storage region 441 stores the recorded cell information acquired in the previous cell selection procedure of the mobile terminal. The neighbor cell information storage region 443 stores the neighbor cell information extracted from the system information message broadcast by the serving cell periodically. Although cell information storage region 440 is divided into the recorded cell information storage region 441 and the neighbor cell information storage region 443 in FIG. 4, the recorded cell information storage region 441 and the neighbor cell information region 443 can be integrated as a signal cell information storage region.

The storage unit 430 also includes the application storage region 455 for storing at least one application program for executing functions associated with the cell selection procedure according to an exemplary embodiment of the present invention.

In an exemplary embodiment, the application program includes a mode processing applications for determining the cell selection mode of the mobile terminal according to the user setting and system environment, cell information processing applications for storing the cell information acquired in the previous cell selection process and the neighbor cell information extracted from the system information message, and a cell selection application for selecting a cell based on the cell information. The cell selection application can be configured to select a cell using at least one of the recorded cell information and the neighbor cell information.

The output unit 440 can be composed of different kinds of output modules for outputting data of the mobile terminal. The output unit 440 includes a display unit for displaying various visual data and an audio processing unit for processing audio signal so as to output in the form of audible sound wave. The audio processing unit processes the audio signal from the control unit 450 (including voice signal received from a counterpart user through the network) and output the audio signal through a speaker in the form of an audible sound wave.

The control unit 460 controls general operations of the mobile terminal and signaling among the internal function blocks. The control unit 460 controls the signaling among the RF unit 410, input unit 420, storage unit 430, and output unit 450. The control unit 460 can include a data processing unit having a codec and a modem for processing mobile communication services.

Particularly in an exemplary embodiment of the present invention, the control unit 460 controls the cell selection procedure. The control unit 460 searches the storage unit 430 for the recorded cell information and the neighbor cell information. Particularly, the control unit 460 determines the cell selection mode performs cell selection process in the selected cell selection mode.

In more detail, once a cell selection trigger event is detected, the control unit 460 checks the preset cell selection mode and performs the cell selection procedure according to the preset cell selection mode. When the mobile terminal is preset with the recorded cell selection mode, the control unit 460 skips the cell search process; otherwise, when the mobile terminal is preset with the initial cell selection mode, the control unit 460 performs the cell search process. The control unit 460 switches between the recorded cell selection mode and the initial cell selection mode dynamically. The operations in the respective cell selection modes are proceeded as described with reference to FIG. 3.

The control unit 460 can control such that the cell selection mode of the mobile terminal is selected according to the system environment. In this case, when it is determined that the frequency scan is required based, the control unit 460 configures the mobile terminal to operate in the initial cell selection mode. Otherwise, when it is determined that the frequency scan is not required, the control unit configures the mobile terminal to operate in the recorded cell selection mode. The control unit 460 switches between the recorded cell selection mode and the initial cell selection mode dynamically.

In order to determine the cell selection mode, the control unit 460 can measure the current system environment before performing the cell selection process. The system environment measurement can be performed by comparing the received signal level with a predetermined threshold value. For instance, when the received signal level is greater than the threshold value, the control unit 460 configures the mobile terminal to operate in the recorded cell selection mode; otherwise, the control unit 460 configures the mobile terminal to operate in the initial cell selection mode.

When the mobile terminal operates in the recorded cell selection mode, the control unit 460 reads the recorded cell information (previous cell information and neighbor cell information) from the storage unit 430 and performs the cell selection process based on the cell information.

The control unit 460 also can extract the neighbor cell information from the system information message broadcast by the network and perform the cell selection process based on the neighbor cell information. The control unit 460 also can store the neighbor cell information extracted from the system information message into the storage unit 430.

For the sake of control efficiency, the control unit 460 includes the cell selection mode processor 461, the cell information processor 463, and the cell selection procedure 465.

The cell selection mode processor 461 can select the cell selection mode of the mobile terminal according to the user's intention. The cell selection mode processor 461 can select the cell selection mode of the mobile terminal depending on the system environment.

The cell information processor 463 stores the cell information acquired in the cell selection process into a specific storage region of the storage unit 430. The cell information processor 463 also extracts the neighbor cell information from the system information message received from the network and stores the extracted neighbor cell information into a specific storage region.

The cell selection processor 465 performs the cell selection process. Particularly, the cell selection processor 465 can use the cell information stored in the storage unit 430 to perform the cell selection process efficiently.

Although FIG. 1 is depicted with only the function blocks related to the cell selection procedure, for the sake of simplicity, the structures of the mobile terminal is not limited thereto. For instance, the mobile terminal may further include at least one of a camera module, a subscriber identity module (SIM), a local area network communication module, and a digital broadcast receiver module.

In an exemplary embodiment, at least one of the internal function blocks constituting the mobile terminal can be removed or replaced by its equivalent module. In an exemplary case of dual mode mobile terminal, the single RF unit 410 can be replaced with two RF units for providing two different radio communication interfaces.

In an exemplary case that the mobile terminal operates with a Subscriber Identity Module (SIM) card, the above described cell information can be stored in the SIM card. Since the structure and utilization of the SIM card are identical with those of the storage unit 430, detailed description on the SIM card is omitted.

As described above, the cell selection method and mobile terminal of the present invention stores the cell information acquired in the previous cell selection/reselection procedure and uses the previously stored cell information in the next cell selection/reselection procedure, thereby reducing the cell selection time and thus the power consumption.

Also, the cell selection method and mobile terminal of the present invention reduces the number of cells involved in the cell selection process by using the previous cell information, thereby quickly selecting the suitable cell to camp on and improving the cell selection efficiency and communication service quality.

Although exemplary embodiments of the present invention are described in detail hereinabove, it should be clearly understood that many variations and/or modifications of the basic inventive concepts herein taught which may appear to those skilled in the present art will still fall within the spirit and scope of the present invention, as defined in the appended claims.

## Claims

1. A cell selection method for a mobile terminal in a communication system, comprising:
retrieving recorded cell information in response to a cell selection event;
selecting, when the recorded cell information is retrieved, a cell using the recorded cell information; and
selecting, when no recorded cell information is retrieved, a cell using neighbor cell information extracted from a system information message broadcast by a serving cell.

2. The cell selection method of claim 1, wherein the recorded cell information comprises at least one of previous cell information and neighbor cell information.

3. The cell selection method of claim 2, wherein selecting a cell using the recorded cell information comprises:
performing, when a neighbor cell information is retrieved, cell selection the neighbor cell information; and
performing, when a previous cell information is retrieved, cell selection with the previous cell information.

4. The cell selection method of claim 3, further comprising determining a cell selection mode when the cell selection event is detected.

5. The cell selection method of claim 4, further comprising:
retrieving, when the cell selection mode is a recorded cell selection mode, the previous cell information and the neighbor cell information; and
performing the cell selection using the retrieved cell information.

6. The cell selection method of claim 4, further comprising:
retrieving, when the cell selection mode is an initial cell selection mode, the previous cell information and the neighbor cell information;
scanning frequencies for finding available frequencies; and
performing the cell selection using the cell information and the available frequencies.

7. The cell selection method of claim 6, wherein performing the cell selection using the cell information and the available frequencies comprises:
determining whether at least one available frequency corresponding to the neighbor cell information exists;
attempting, when at least one available frequency corresponding to the neighbor cell information exists, to select a cell using the neighbor cell information first; and
attempting, when no available frequency corresponding to the neighbor cell information exists, to select a cell using the previous cell information.

8. The cell selection method of claim 4, wherein the cell selection mode is determined based on user's setting or system environment.

9. The cell selection method of claim 8, further comprising:
measuring, when the cell selection mode is preset based on the system environment, the system environment; and
selecting the cell selection mode based on the measured system environment.

10. A mobile terminal comprising:
a radio frequency unit which establishes a communication channel with a serving network for voice and data communication and receiving system information message;
a storage unit which stores cell information for used in a cell selection process and applications for performing the cell selection process; and
a control unit which determines a cell selection mode and controls the cell selection process using the cell information in the cell selection mode.

11. The mobile terminal of claim 10, wherein the storage unit comprises:
a previous cell information region which stores previous cell information acquired in previous cell selection process; and
a neighbor cell information region which stores neighbor cell information extracted from system information message broadcast by a serving cell.

12. The mobile terminal of claim 11, wherein the applications comprise an application for determining the cell selection mode based on user settings, an application for determining the selection mode based on system environment, an application for storing the previous cell information and the neighbor cell information, and an application for processing the cell selection process in the determined cell selection mode using at least one of the previous cell information and the neighbor cell information.

13. The mobile terminal of claim 11, wherein the control unit selects a cell with the previous cell information and the neighbor cell information in a recorded cell selection mode and by comparing the previous cell information and the neighbor cell information with available frequencies searched by scanning all frequencies in an initial cell selection mode.

14. The mobile terminal of claim 13, wherein the control unit determines whether at least one of the available frequencies corresponds to the previous cell information or the neighbor cell information and performs the cell selection process with the neighbor cell information first.

15. The mobile terminal of claim 13, wherein the control unit comprises:
a cell selection mode processor which selects one of the recorded cell selection mode and the initial cell selection mode according to a user setting or adaptive to a system environment;
a cell information processor which processes the previous cell information and the neighbor cell information to be stored into a specific region of the storage unit; and
a cell selection processor which performs the cell selection process using the cell information stored in the storage unit.
